Europäisches Patentamt

European Patent Office

Office européen des brevets

(19)

(11) Veröffentlichungsnummer: **0 292 858 B1**

# (12) EUROPÄISCHE PATENTSCHRIFT

(45) Veröffentlichungstag der Patentschrift:
**17.04.91 Patentblatt 91/16**

(51) Int. Cl.$^5$: **B60K 17/348, B60K 23/08**

(21) Anmeldenummer: **88107986.7**

(22) Anmeldetag: **19.05.88**

(54) **Bremsmechanismus für das eine Viskose-Kupplung beschaltende Zusatzgetriebe eines Kraftfahrzeugs mit Allradantrieb.**

(30) Priorität: **27.05.87 DE 3717903**

(43) Veröffentlichungstag der Anmeldung:
**30.11.88 Patentblatt 88/48**

(45) Bekanntmachung des Hinweises auf die
Patenterteilung:
**17.04.91 Patentblatt 91/16**

(84) Benannte Vertragsstaaten:
**DE ES FR GB IT SE**

(56) Entgegenhaltungen:
**DE-A- 3 611 093**
**DE-A- 3 630 979**
**GB-A- 2 132 303**

(73) Patentinhaber: **Adam Opel Aktiengesellschaft
Bahnhofsplatz 1 Postfach 17 10
W-6090 Rüsselsheim (DE)
DE ES FR GB IT SE**
Patentinhaber: **General Motors Espana, S.A.
Poligono Entrerrios
Figueruelas (Zaragoza) (ES)
ES**

(72) Erfinder: **Hemmer, Hans-Peter, Dipl.-Ing.
Van-Dyck-Strasse 5
W-5205 St. Augustin 1 (DE)**

(74) Vertreter: **Bergerin, Ralf, Dipl.-Ing. et al
Adam Opel Aktiengesellschaft Bahnhofplatz 1
Postfach 17 10
W-6090 Rüsselsheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Kraftfahrzeug mit Allradantrieb, bei dem die Räder nur einer Achse ständig angetrieben sind, während der Antrieb für die Räder der zweiten Achse mittels einer im Antriebsstrang zwischen den Achsen liegenden, in Abhängigkeit von den Fahrbedingungen selbsttätig wirkenden Kupplung, insbesondere einer Viskose-Kupplung, herstellbar ist, in welchem Antriebsstrang eine die drehmomentenmäßige Kopplung und Entkopplung des Antriebs ermöglichende Zusatzkupplung in Gestalt eines zwischen den Achsen vorgesehenen Umlaufrädergetriebes, insbesondere eines Planetengetriebes liegt, auf das ein mittels eines hydraulischen Arbeitszylinders betätigbarer Bremsmechanismus zum Sperren eines Getriebeelements wirkt.

Ein derartiges Kraftfahrzeug mit Allradantrieb ist aus der DE-A-3 611 093 bekannt geworden, die am 08.10.1987 veröffentlicht wurde. Bei diesem Kraftfahrzeug wird das in dem als Zusatzkupplung zwischen den Achsen vorgesehene Umlaufrädergetriebe drehbar gelagerte Hohlrad als sperrbares Getriebeelement – anders als nach der Erfindung – mit Hilfe eines Bremsbandes gesperrt.

Eine Viskose-Kupplung überträgt bei geringen Drehzahldifferenzen der gekuppelten Wellen nur sehr kleine Drehmomente, und bei größeren Drehzahldifferenzen hohe Drehmomente. Je nach Einbauart im Antriebsstrang kann die Viskose-Kupplung daher als in Abhängigkeit von den Fahrbedingungen selbsttätig sperrendes Mittendifferential oder kombiniertes Mittendifferential und Achsdifferential arbeiten. Im normalen Fahrbetrieb des Kraftfahrzeugs treten nur geringe Drehzahldifferenzen zwischen den Rädern der beiden Achsen auf. Die Viskose-Kupplung überträgt ein entsprechend geringes Abtriebsmoment, und man hat ein Fahrverhalten, das im wesentlichen dem eines Kraftfahrzeuges mit nur einer angetriebenen Achse entspricht. Ergeben sich aber beispielsweise bei geringen Reibwerten, wie sie auf nassen, eis- oder schneeglatten oder sandigen Straßen vorzufinden sind, größere Drehzahldifferenzen zwischen den Rädern, so "sperrt" die Viskose-Kupplung, und man hat je nach Einbauart der Viskose-Kupplung das Fahrverhalten eines allradgetriebenen Fahrzeugs mit gesperrtem Mittendifferential bzw. gesperrtem Mittendifferential und gesperrtem Achsdifferential. Mit der Viskose-Kupplung wird also ein permanent in Bereitschaftsstellung befindlicher Allradantrieb realisiert.

Die mit der Viskose-Kupplung bewirkte drehzahldifferenzabhängige Kopplung zwischen den Achsen des Kraftfahrzeugs ist nun nicht immer erwünscht. Blockieren beispielsweise bei einer Betätigung der Betriebsbremse die Vorderräder, so werden über die Viskose-Kupplung zwangsweise auch die Hinterräder überbremst, was zu einem Verlust der Fahrstabilität führt. Ein etwa vorgesehenes Antiblockiersystem muß den Besonderheiten des Allradantriebs mit Viskose-Kupplung Rechnung tragen, was einen hohen konstruktiven Aufwand mit sich bringt. Im Schubbetrieb des Motors bei Geradeausfahrt treibt die Hinterachse über die Viskose-Kupplung den Motor an. Dabei verlieren die Hinterräder auf glattem Untergrund an Seitenführungskraft und das Fahrzeug kann ausbrechen. Im Schubbetrieb bei enger Kurvenfahrt treibt umgekehrt die Vorderachse über die Viskose-Kupplung die Hinterachse an. Daraus resultiert ein Verlust an Seitenführungskraft, aufgrund dessen das Fahrzeug nach außen schiebt. Ein allradgetriebenes Fahrzeug mit Viskose-Kupplung läßt sich nicht wie üblich mit angehobener Vorderachse auf einer Abschleppbrille abschleppen, da dies Drehzahldifferenzen in der Viskose-Kupplung zur Folge hat, die zum Hump und zur Zerstörung fuhren. Beim Rangieren des Fahrzeugs insbesondere zum Ausparken kann es bei winterlichen Temperaturen zu einem Haftschluß in der Viskose-Kupplung kommen. Daraus resultiert ein erheblich vergrößerter Lenkkraftaufwand, der die Bedienung des Fahrzeugs höchst unbequem macht. Bei Rollenprüfstandsmessungen beispielsweise für Leistungs- und Emissionstests braucht man für allradgetriebene Fahrzeuge mit Viskose-Kupplung einen Zweiachs-Rollenprüfstand, der viel aufwendiger ist als ein Einachs-Rollenprüfstand und in den Werkstätten vielfach noch nicht zur Verfügung steht. Ebenso muß bei einem dynamischen Auswuchten der Räder das ganze Fahrzeug vom Boden abgehoben werden, und nicht nur die Räder an jeweils einer auszuwuchtenden Achse, was einen erheblichen Mehraufwand bedingt. Nach alledem gibt es sowohl im Fahrbetrieb als auch bei der Wartung eines allradgetriebenen Fahrzeugs mit Viskose-Kupplung genug Situationen, in denen man auf die drehmomentenmäßige Kopplung der Achsen über die Viskose-Kupplung lieber verzichten würde.

In der Patentanmeldung DE-A-3 611 093 wurde bereits vorgeschlagen, zusammen mit der Viskose-Kupplung eine die drehmomentenmäßige Kopplung und Entkopplung des Antriebs ermöglichende, steuerbare Zusatzkupplung in den Antriebsstrang eines Kraftfahrzeugs zu legen. Als Zusatzkupplung dient ein zwischen den Achsen vorgesehenes Umlaufrädergetriebe, insbesondere ein Planetengetriebe, auf das um Sperren eines Getriebeelements ein Bremsmechanismus wirkt. Letzterer enthält ein Bremsband, das das drehbar gelagerte Hohlrad des Planetengetriebes umschlingt und sich mittels eines hydraulischen Arbeitszylinders spannen läßt, um das Hohlrad festzubremsen. Die vorliegende Erfindung betrifft eine Alternative zu diesem an sich bewährten Bremsmechanismus, ist aber auch bei einer solchen Anordnung anwendbar.

Aufgabe der Erfindung ist es, einen konstruktiv unaufwendigen, kompakten und anschlußtechnisch günstigen, einen einfachen Aufbau des Hydraulikkreises ermöglichenden Bremsmechanismus für das eine Viskose-Kupplung beschaltende Zusatzgetriebe eines Kraftfahrzeugs mit Allradantrieb anzugeben.

Diese Aufgabe wird in einem Kraftfahrzeug mit Allradantrieb der genannten Art dadurch gelöst, daß der Arbeitszylinder mit einem auf das sperrende Getriebeelement einwirkenden Bremskolben und eine den Arbeitsraum des Arbeitszylinders mit Getriebeöl beaufschlagende Pumpe sowie der Getriebeölraum und ein in dem Hydraulikkreis liegendes Steuerventil mit einer die Viskose-Kupplung und das Umlaufrädergetriebe enthaltenden Verteilergetriebeeinheit baulich vereinigt sind.

Durch die Erfindung wird der Arbeitszylinder mit Bremskolben und der zugehörige Hydraulikkreis in das Getriebegehäuse der Zusatzkupplung bzw. der aus Zusatzkupplung und Viskose-Kupplung bestehenden Verteilergetriebeeinheit integriert. Damit erreicht man einen höchst kompakten Aufbau. Die Zahl der Baueinheiten wird verringert, und der Montageaufwand herabgesetzt. Dank der Speisung des Arbeitszylinders mit Getriebeöl kommt man mit einem einzigen Flüssigkeitssystem in der Getriebeeinheit aus. Die hydraulische Anschlußführung und Beschaltung ist entsprechend einfach. Vorteilhaft ist weiter, daß auf der Pumpenseite nur ein relativ niedriges Druckniveau erforderlich ist.

Bei der Pumpe kann es sich um eine Hubkolbenpumpe handeln. Diese Bauform zeichnet sich durch einen robusten und wenig störanfälligen Aufbau aus. Die Pumpe kann von der Hauptantriebsachse des Kraftfahrzeugs angetrieben sein, und zwar vorzugsweise über ein Exzentergetriebe.

Zwischen die Pumpe und den Arbeitszylinder ist vorzugsweise ein Druckfederspeicher eingeschaltet, der ebenfalls mit der Verteilergetriebeeinheit baulich vereinigt sein kann. Der Druckfederspeicher puffert in vorteilhafter Weise Druckschwankungen, und er stellt sicher, daß stets der erforderliche Betriebsdruck für den Bremsmechanismus zur Verfügung steht.

Der Arbeitszylinder des Bremsmechanismus kann einfachwirkend, und der Bremskolben durch ein Federelement, insbesondere ein Federlamellenpaket, von dem zu sperrenden Getriebeelement abgestellt sein. Diese Anordnung zeichnet sich durch eine einfache Anschlußführung und Beschaltung des Arbeitszylinders aus.

Der Bremskolben kann als Ringkolben ausgebildet sein, der auf ein drehbar gelagertes Hohlrad des Planetengetriebes arbeitet und dieses festzubremsen geeignet ist. Man paßt sich so mit großer wirksamer Bremsfläche der Geometrie des Planetengetriebes optimal an und erreicht einen sehr kompakten Aufbau. Der Antrieb des Planetengetriebes kann über den Planetenträger, und der Abtrieb über das Sonnenrad erfolgen.

Das Hohlrad kann im normalen Fahrbetrieb des Kraftfahrzeugs festgebremst sein. Die drehmomentmäßige Kopplung der Achsen über die Viskose-Kupplung ist dann wirksam, und der Allradantrieb in ständiger Bereitschaftsstellung. Mittels einer geeigneten Steuereinheit sollte hingegen das Hohlrad durch Druckentlastung des Arbeitszylinders und Losen des Bremskolbens freigegeben, und die drehmomentmäßige Kopplung der Achsen aufgehoben werden, wenn bestimmte Fahr- oder Testbedingungen vorliegen. Dazu gehört jede Betätigung der Betriebsbremse, damit nicht bei einem Überbremsen der Räder an der Vorderachse, die üblicherweise stärker zur Haftwertausnutzung beim Bremsen herangezogen werden, zwangsweise auch die Räder der Hinterachse blockieren. Die Entkopplung der Achsen beim Bremsen hat außerdem den Vorteil, daß das Fahrzeug mit einem Antiblockiersystem ausgerüstet werden kann, wie es für einachsig angetriebene Fahrzeuge üblich ist. Es entfällt also der Bauaufwand für ein besonderes, mit einem Vierradantrieb kompatibles Antiblockiersystem. Die Steuereinheit sollte auch im Schubbetrieb des Motors ansprechen und das Hohlrad freigeben, um so die Fahrstabilität zu verbessern. Beim Abschleppen des Fahrzeugs ist ebenfalls ein möglichst automatisches Freigeben des Hohlrads erwünscht, damit schädliche Drehzahldifferenzen in der Viskosekupplung vermieden werden. Genauso sollte die Steuereinheit im Fall niedriger Umgebungstemperaturen beim Rangieren ansprechen um im Fall eines möglicherweise vorliegenden Haftschlusses in der Viskose-Kupplung den Lenkkraftaufwand gering zu halten. Und schließlich sollte für Wartungsarbeiten zumindest eine Werkstatt die Möglichkeit haben, die Steuereinheit zu aktivieren und das Hohlrad freizugeben, damit das Fahrzeug beispielsweise für Leistungs- und Emissionsmessungen auf einem Einachs-Rollenprüfstand getestet werden kann und beim dynamischen Auswuchten der Räder nur im Bereich einer Achse angehoben werden muß.

Die Steuereinheit kann als Eingangsgrößen insbesondere ein die Stellung von Bremspedal und Fahrpedal sowie ein den Einschaltzustand der Zündung charakterisierendes Signal erhalten. Weitere mögliche Eingangsgrößen für die Steuereinheit sind das Signal eines Lenkwinkelgebers und das Signal eines Temperaturfühlers an der Viskose-Kupplung sowie gegebenenfalls ein die Motordrehzahl charakterisierendes Signal und das Signal eines Zeitgebers. Die Steuereinheit ermittelt aus diesen Eingangsgrößen ein die Bremse für das Hohlrad aktivierendes Ausgangssignal.

In einer alternativen Betriebsform der Erfindung ist das Hohlrad des Planetengetriebes im normalen Fahrbetrieb freigegeben. Der Allradantrieb ist dann per se nicht in der sonst durch die Viskose-Kupplung gewährleisteten ständigen Bereitschaftsstellung, sondern er wird durch Abbremsen des Hohlrads zugeschaltet. Damit geht der Vorteil einer geringen

Getriebeverlustleistung einer während im übrigen alle Nutzungsmöglichkeiten einer Viskose-Kupplung weiter bestehen ; insbesondere bildet die Viskose-Kupplung ein konstruktiv vergleichsweise unaufwendiges Mittendifferential bzw. kombiniertes Mittendifferntial und Achsdifferential. Das Festbremsen des Hohlrads kann durch einen Bedienungseingriff oder automatisch erfolgen, wobei man in letzterer Variante vorzugsweise die Drehzahl von Vorderachse und Hinterachse erfaßt und bei Überschreiten einer bestimmten Drehzahldifferenz den auf das Hohlrad arbeitenden Bremskolben wirksam werden läßt. Zur Drehzahlerfassung können beispielsweise die entsprechenden Sensoren eines Antiblockiersystems dienen. Im prompten Einsetzen des Vierradantriebs steht die beschriebene Getriebeanordnung der einer Viskose-Kupplung allein nicht merklich nach.

Das erfindungsgemäße Kraftfahrzeug kann einen vorzugsweise quer eingebauten Frontmotor haben. Seine Hauptantriebsachse ist vorzugsweise die Vorderachse, während die Viskose-Kupplung und das die Funktion einer Zusatzkupplung erfüllende Planetengetriebe in einem Antriebsstrang zur Hinterache liegen. Das Planetengetriebe kann dabei hinter dem Vorderachsdifferential und vorzugsweise unmittelbar vor der Viskose-Kupplung angeordnet sein. Doch sind auch andere Einbaupositionen für das Planetengetriebe denkbar, beispielsweise am Ende einer Kardanwelle vor dem Hinterachsdifferential.

Schließlich kann das erfindungsgemäße Kraftfahrzeug aber auch einen Standardantrieb mit einem Frontmotor und einer die Hauptantriebsachse bildenden Hinterachse haben. Man zweigt dann von dem zur Hinterachse führenden Antriebsstrang über das zugleich die Funktion einer Zusatzkupplung erfüllende Planetengetriebe und die Viskose-Kupplung einen Antriebsstrang an die Vorderachse ab.

Die Erfindung wird im folgenden anhand eines in den Zeichnungen dargestellten Ausführungsbeispiels näher erläutert. Teilweise schematisch zeigen :

Fig. 1 das im Bereich des Vorderachsdifferentials angeordnete Verteilergetriebe eines allradgetriebenen Kraftfahrzeugs mit Frontmotor, ausgelegt als Planetengetriebe mit einem durch einen hydraulisch betätigten Bremskolben festbremsbaren Hohlrad ;

Fig. 2 einen Hydraulikkreis zur Betätigung des Bremskolbens ; und

Fig. 3 eine Steuereinheit, mit der das Anlegen und Lösen des Bremskolbens gesteuert wird.

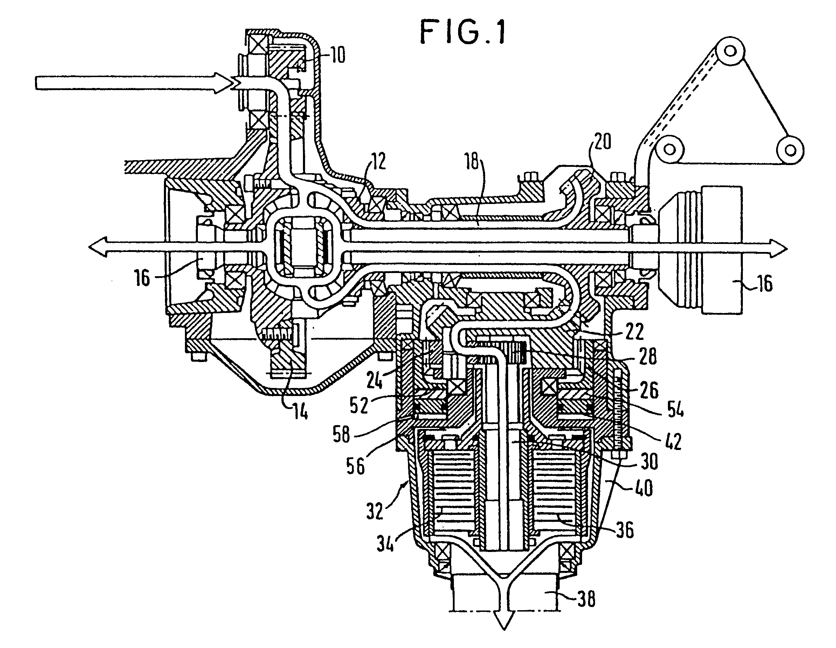

Fig. 1 zeigt die im Bereich des Vorderachsdifferentials liegende Getriebeanordnung eines Kraftfahrzeugs mit quer eingebautem Frontmotor. Das Antriebsdrehmoment des Motors wird über ein übliches Schaltgetriebe übertragen, dessen Ausgangsrad 10 eine Außenverzahnung aufweist und mit einem starr an dem Differentialgehäuse 12 des Vorderachsdifferentials angeordneten Zahnrad 14 kämmt. Ein Teil des Antriebsdrehmoments wird so über das Vorderachsdifferential auf die Vorderachswellen 16 und die daran sitzenden Vorderräder des Kraftfahrzeugs übertragen. Das Differentialgehäuse 12 ist drehfest mit einer Hohlwelle 18 verbunden, auf der in starrer Anordnung ein Tellerrad 20 sitzt. Letzteres steht mit einem Kegelrad 22 im Eingriff, das einen Planetenradträger bildet. Eines der Planetenräder ist bei 24 dargestellt. Die Planetenräder 24 stehen radial außen mit einem Hohlrad 26 und radial innen mit einem Sonnenrad 28 im Eingriff. Mit dem Sonnenrad 28 ist in starrer Anordnung ein Wellenstummel 30 verbunden, der in das Gehäuse einer Viskose-Kupplung 32 ragt und einen antriebsseitigen Lamellensatz 34 trägt. Dieser arbeitet mit einem abtriebsseitigen Lamellensatz 36 an einer zur Hinterachse führenden Gelenkwelle 38 zusammen. Das Hohlrad 26 des Planetengetriebes ist in einem fest mit der Fahrzeugkarosserie verbundenen Getriebegehäuse 40 gelagert. Es wird von einem Bremskolben 42 beaufschlagt und kann durch dessen hydraulische Betätigung festgebremst werden.

Der Bremskolben 42 ist ein auf gleicher Achse mit dem Hohlrad 26 angeordneter Ringkolben, der stirnseitig vor einem radial nach innen gezogenen Flansch 52 des Hohlrads 26 zu liegen kommt. Zwischen Flansch 52 und Bremskolben 42 ist ein ringförmiges Federlamellenpaket 54 mit am Hohlrad 26 und am Gehäuse befestigten Lamellen eingeschaltet, durch das der Bremskolben 42 von dem Hohlrad 26 abgestellt wird. Auf der dem Hohlrad 26 abgewandten Seite des Bremskolbens 42 befindet sich ein Arbeitsraum 56 mit einem hydraulischen Anschluß 58. Bei druckentlastetem Arbeitsraum 56 ist der Bremskolben 42 gelöst und das Hohlrad 26 freigegeben. Bei Druckbeaufschlagung des Arbeitsraums 56 wird der Bremskolben 42 angelegt und das Hohlrad 26 festgebremst.

Über den Antriebsstrang zur Hinterachse, in dem die Viskose-Kupplung 32 liegt, wird bei festgebremstem Hohlrad 26 ein permanent in Bereitschaftsstellung befindlicher Allradantrieb geschaffen. Bei geringen Drehzahldifferenzen zwischen Vorder- und Hinterachse, wie sie im normalen Fahrbetrieb vorliegen, überträgt die Viskose-Kupplung 32 nur ein geringes Drehmoment, so daß man im wesentlichen das Fahrverhalten eines Kraftfahrzeugs mit Frontmotor und Vorderradantrieb erhält. Ergeben sich aber größere Drehzahldifferenzen zwischen den Rädern an Vorder- und Hinterachse, wie dies beispielsweise bei Schlupf eines oder mehrerer der Räder auf glattem Untergrund der Fall ist, so "sperrt" die Viskose-Kupplung, und man hat das Fahrverhalten eines Kraftfahrzeugs mit Allradantrieb und gesperrtem Mittendifferential.

Bei gelöstem Bremskolben 42 läuft das Hohlrad 26 frei. Drehzahldifferenzen zwischen den Rädern der Vorder- und Hinterachse können dann in dem Planetengetriebe mit sehr geringen Reibungsverlusten ausgeglichen werden, ohne daß sich etwas am Gleichlauf der antriebs- und abtriebsseitigen Lamellensätze 34, 36 der Viskosekupplung 32 ändert. Die Viskose-Kupplung 32 überträgt also kein oder nur ein minimales Drehmoment, und Vorder- und Hinterachse bleiben drehmomentenmäßig auch unter Bedingungen entkoppelt, unter denen bei festem Hohlrad 26 die Viskose-Kupplung 32 sperren würde. Durch Lösen des Bremskolbens 42 wird also der Allradantrieb praktisch außer Funktion gesetzt, und man erhält das Betriebsverhalten eines Fahrzeugs mit reinem Vorderradantrieb.

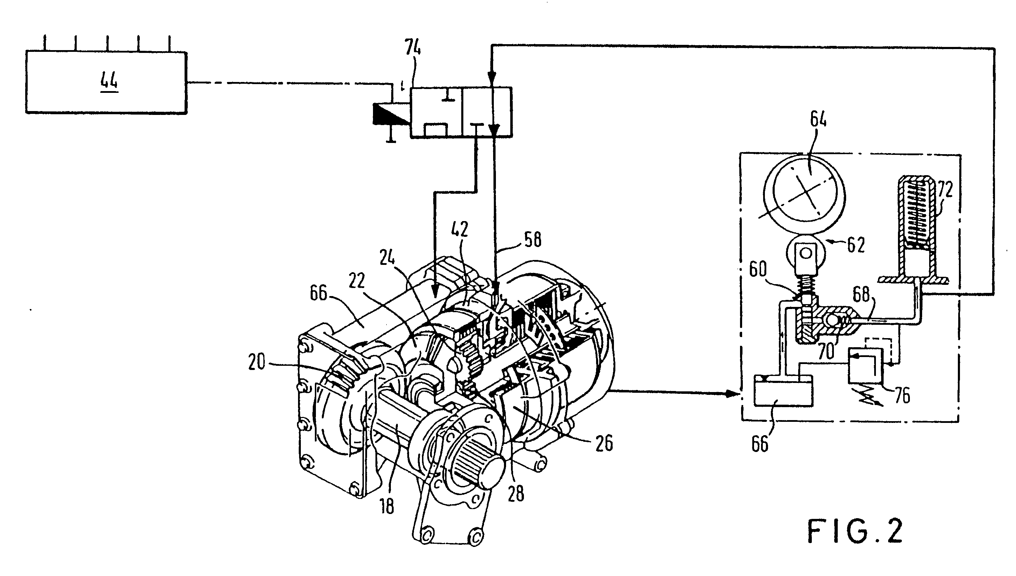

Ein Hydraulikkreis zur Ansteuerung des Bremskolbens 42 ist schematisch in Fig. 2 dargestellt. Er enthält eine hydraulische Hubkolbenpumpe 60, die über ein Exzentergetriebe 62 von der Hauptantriebsachse des Fahrzeugs, d.h. der Vorderachse 64, angetrieben wird. Die Pumpe ist baulich mit dem aus Planetengetriebe und Viskose-Kupplung 32 bestehenden Verteilergetriebeeinheit vereinigt. Sie saugt Öl aus einem Getriebeölreservoir 66 der Verteilergetriebeeinheit an und stößt es an einem Hochdruckanschluß 68 aus, vor dem ein Rückschlagventil 70 liegt. Dem Hochdruckanschluß ist ein Druckfederspeicher 72 nachgeschaltet. Eine Verzweigung vor dem Druckfederspeicher 72 führt zu einem elektromagnetisch betätigten Steuerventil 74, das den Anschluß 58 zu dem Arbeitsraum 56 vor dem Bremskolben 42 beschaltet. Das Steuerventil 74 hat zwei Schaltstellungen. In der ersten Schaltstellung ist der Hochdruckanschluß der Hubkolbenpumpe 60 mit dem Arbeitsraum 56 verbunden, so daß der Bremskolben 42 hydraulisch beaufschlagt ist und das Hohlrad 26 festbremst. In einer zweiten Schaltstellung ist der Hochdruckanschluß der Hubkolbenpumpe 60 von dem Arbeitsraum 56 getrennt und der Arbeitsraum 56 zu dem Getriebeölreservoir 66 hin druckentlastet. Der Bremskolben 42 ist dann gelöst und das Hohlrad 26 freigegeben. Ein vorzugsweise einstellbares Druckbegrenzungsventil 76 sorgt in der zweiten Schaltstellung dafür, daß der Betriebsdruck auf der Hochdruckseite der Hubkolbenpumpe 60 nicht übermäßig ansteigt.

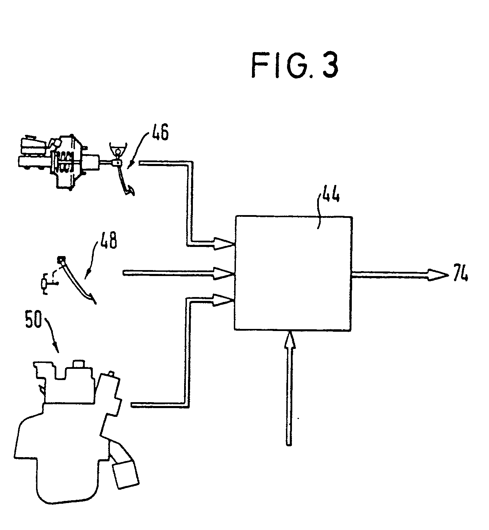

Das Steuerventil 74 wird mit einer Steuereinheit 44 angesteuert, wie sie schematisch in Fig. 3 dargestellt ist. Man geht hier von einem normalen Fahrbetrieb aus, bei dem sich das Steuerventil 74 in seiner ersten Schaltstellung befindet, der Bremskolben 42 angelegt, das Hohlrad 26 festgebremst und der über die Viskose-Kupplung 32 laufende Vierradantrieb in Bereitschaftsstellung ist. Das Steuerventil 74 kann durch ein Signal der Steuereinheit 44 in den zweiten Schaltzustand umgesteuert werden, in dem der Bremskolben 42 gelöst und die drehmomentenmäßige Kopplung von Vorderachse und Hinterachse unterbrochen ist.

Die Steuereinheit 44 erhält Eingangsgrößen, die die Stellung eines Bremspedals 46, eines Fahrpedals 48 sowie den Einschaltzustand der Zündung 50 kennzeichnen. Weitere Eingangsgrößen können von einem Temperaturfühler an der Viskose-Kupplung 32 und von einem Lenkwinkelgeber kommen, wobei letztere dazu dient, einen Rangierbetrieb des Fahrzeugs zu identifizieren. Hierzu kann zusätzlich ein die Motordrehzahl charakterisierendes Signal und das Signal eines Zeitgebers herangezogen werden, der beispielsweise ein Zeitintervall nach dem Einschalten der Zündung 50 mißt. Aus diesen Eingangsgrößen wird in der Steuereinheit 44 das gewünschte Ausgangssignal für die Bremskolbenbetätigung ermittelt.

Der Bremskolben 42 wird insbesondere dann gelöst, wenn die Betriebsbremse des Fahrzeugs betätigt wird. Dieser Betriebszustand wird anhand der Eingangsgrößen der Steuereinheit 44 dadurch identifiziert, daß das Bremspedal 46 getreten, das Fahrpedal 48 in seiner Null-Stellung und die Zündung 50 eingeschaltet ist.

Weiter wird der Bremskolben 42 im Schubbetrieb des Fahrzeugs gelöst. Hierzu müssen Fahrpedal 48 und Bremspedal 46 in ihrer Null-Stellung und die Zündung 50 eingeschaltet sein.

Bei niedrigen Umgebungstemperaturen wird der Bremskolben 42 beim Rangieren insbesondere zum Ausparken des Fahrzeugs gelöst. Hierzu muß die von dem Temperaturfühler an der Viskose-Kupplung 32 gemessene Temperatur unterhalb einer bestimmten Temperaturschwelle, beispielsweise $-5C°$, liegen, was durch ein entsprechendes Signal des Temperaturfühlers angezeigt wird. Weiter muß der Rangierbetrieb des Fahrzeugs anhand eines entsprechenden Signals des Lenkwinkelgebers und/oder eines die niedrige Motordrehzahl charakterisierenden Signals identifiziert sein. Der Lenkwinkelgeber kann beispielsweise bei mehr als einer Lenkradumdrehung ansprechen. Alternativ oder zusätzlich kann der regelmäßig erforderliche Rangierbetrieb kurz nach Einschalten der Zündung 50 des Kraftfahrzeugs durch ein entsprechendes Signal eines Zeitgebers identifiziert werden.

Schließlich sollte das Fachpersonal einer Werkstatt, eventuell aber auch der Fahrer des Kraftfahrzeugs durch einen geeigneten Schalteingriff in der Lage sein, die Steuereinheit 44 zu aktivieren, um den Bremskolben 42 zu lösen. Damit können insbesondere bei Rollenprüfstandsmessungen und bei einem dynamischen Auswuchten der Räder die Achsen des Fahrzeugs drehmomentenmäßig entkoppelt werden. Dasselbe gilt, wenn das Fahrzeug auf einer Abschleppbrille abgeschleppt wird und dabei nur mit zwei Rädern auf dem Boden läuft. Das Abschleppen erfolgt stets mit stehendem Motor, aber mit möglicherweise eingeschalteter Zündung 50, so daß zur automatischen drehmomentenmäßigen Entkopplung der Achsen eine weitere Steuerungsvorgabe erforderlich ist. Man kann hier insbesondere ausnutzen, daß bei

angehobener Hauptantriebsachse die Hubkolbenpumpe 60 steht, so daß sich Niederdruckverhältnisse an ihrer Ausstoßseite einstellen. Der Bremskolben 42 ist also gelöst und das Hohlrad 26 freigegeben.

Liste der Bezugszeichen

10 - Ausgangsrad des Schaltgetriebes
12 - Differentialgehäuse
14 - Zahnrad
16 - Vorderachswelle
18 - Hohlwelle
20 - Tellerrad
22 - Kegelrad
24 - Planetenrad
26 - Hohlrad
28 - Sonnenrad
30 - Wellenstummel
32 - Viskose-Kupplung
34 - antriebsseitiger Lamellensatz
36 - antriebsseitiger Lamellensatz
38 - Gelenkwelle
40 - Getriebegehäuse
42 - Bremskolben
44 - Steuereinheit
46 - Bremspedal
48 - Fahrpedal
50 - Zündung
52 - Flansch
54 - Federlamellenpaket
56 - Arbeitsraum
58 - Anschluß
60 - Hubkolbenpumpe
62 - Exzentergetriebe
64 - Vorderachse
66 - Getriebeölreservoir
68 - Hochdruckanschluß
70 - Rückschlagventil
72 - Druckfederspeicher
74 - Steuerventil
76 - Druckbegrenzungsventil

**Ansprüche**

1. Kraftfahrzeug mit Allradantrieb, bei dem die Räder nur einer Achse ständig angetrieben sind, während der Antrieb für die Räder der zweiten Achse mittels einer im Antriebsstrang zwischen den Achsen liegenden, in Abhängigkeit von den Fahrbedingungen selbsttätig wirkenden Kupplung, insbesondere einer Viskose-Kupplung, herstellbar ist, in welchem Antriebsstrang eine die drehmomentenmäßige Kopplung und Entkopplung des Antriebs ermöglichende Zusatzkupplung in Gestalt eines zwischen den Achsen vorgesehenen Umlaufrädergetriebes, insbesondere eines Planetengetriebes (22, 24, 26, 28) liegt, auf das ein mittels eines hydraulischen Arbeitszylinders betätigbarer Bremsmechanismus zum Sperren eines Getriebeelements (26) wirkt, **dadurch gekennzeichnet,** daß der Arbeitszylinder mit einem auf das sperrende Getriebeelement einwirkenden Bremskolben (42) und eine den Arbeitsraum (56) des Arbeitszylinders mit Getriebeöl beaufschlagende Pumpe (60) sowie der Getriebeölraum und ein in dem Hydraulikkreis liegendes Steuerventil (74), das den Anschluß (58) zu dem Arbeitsraum (56) beschaltet, mit einer die Viskose-Kupplung (32) und das Umlaufrädergetriebe (22, 24, 26, 28) enthaltenden Verteilergetriebeeinheit baulich vereinigt sind.

2. Kraftfahrzeug nach Anspruch 1, dadurch **gekennzeichnet,** daß die Pumpe (60) eine Hubkolbenpumpe ist.

3. Kraftfahrzeug nach Anspruch 1 oder 2, dadurch **gekennzeichnet,** daß die Pumpe (60) von der Hauptantriebsachse (64) des Kraftfahrzeugs vorzugsweise über ein Exzentergetriebe (62) angetrieben ist.

4. Kraftfahrzeug nach einem der Ansprüche 1 bis 3, dadurch **gekennzeichnet,** daß zwischen Pumpe (60) und Arbeitszylinder ein Druckfederspeicher (72) eingeschaltet ist, der vorzugsweise ebenfalls mit der Verteilergetriebeeinheit baulich vereinigt ist.

5. Kraftfahrzeug nach einem der Ansprüche 1 bis 4, dadurch **gekennzeichnet,** daß der Arbeitszylinder einfachwirkend, und der Bremskolben (42) durch ein Federelement, insbesondere ein Federlamellenpaket (54), von dem zu sperrenden Getriebeelement abgestellt ist.

6. Kraftfahrzeug nach einem der Ansprüche 1 bis 5, dadurch **gekennzeichnet,** daß der Bremskolben (42) als Ringkolben ausgebildet, der auf ein drehbar gelagertes Hohlrad (26) des Planetengetriebes arbeitet und dieses festzubremsen geeignet ist.

7. Kraftfahrzeug nach einem der Ansprüche 1 bis 6, dadurch **gekennzeichnet,** daß der Antrieb des Planetengetriebes (22, 24, 26, 28) über den Planetenradträger (22), und der Abtrieb über das Sonnenrad (28) erfolgt.

8. Kraftfahrzeug nach einem der Ansprüche 1 bis 7, dadurch **gekennzeichnet,** daß das Hohlrad (26) im normalen Fahrbetrieb festgebremst, und dementsprechend der über die Viskose-Kupplung (32) laufende Vierradantrieb wirksam ist.

9. Kraftfahrzeug nach einem der Ansprüche 1 bis 8, dadurch **gekennzeichnet,** daß es eine Steuereinheit (44) enthält, die das Hohlrad (26) durch Druckentlastung des Arbeitszylinders freigibt, und dementsprechend die Achsen entkoppelt

(a) bei Betätigung der Betriebsbremse (46) sowie gegebenenfalls einem daraus resulierenden Ansprechen eines Antiblockiersystems und/oder

(b) im Schubbetrieb und/oder

(c) beim Abschleppen des Fahrzeugs und/oder

(d) im Fall niedriger Umgebungstemperaturen beim Rangieren und/oder

(e) bei Wartungsarbeiten, beispielsweise Rollenprüfstandsmessungen oder beim dynamischen Auswuchten der Räder.

10. Kraftfahrzeug nach Anspruch 9, dadurch **gekennzeichnet,** daß die Steuereinheit (44) als Eingangsgrößen ein die Stellung von Bremspedal (46) und Fahrpedal (48) sowie ein den Einschaltzustand der Zündung (50) charakterisierendes Signal erhält und ein die Bremse für das Hohlrad (26) aktivierendes Signal abgibt.

11. Kraftfahrzeug nach Anspruch 10, dadurch **gekennzeichnet,** daß die Steuereinheit (44) als weitere Eingangsgrößen das Signal eines Lenkwinkelgebers und das Signal eines Temperaturfühlers an der Viskose-Kupplung (32) und gegebenenfalls ein die Motordrehzahl charakterisierendes Signal und/oder das Signal eines Zeitgebers erhalt.

12. Kraftfahrzeug nach einem der Ansprüche 1 bis 7, dadurch **gekennzeichnet,** daß das Hohlrad (26) im normalen Fahrbetrieb freigegeben, und dementsprechend der über die Viskose-Kupplung (32) laufende Vierradantrieb unwirksam ist.

13. Kraftfahrzeug nach Anspruch 12, dadurch **gekennzeichnet,** daß das Hohlrad (26) durch einen Bedienungseingriff und/oder bei Überschreiten einer vorgegebenen Drehzahldifferenz zwischen den Achsen automatisch betätigt festbremsbar ist.

14. Kraftfahrzeug nach einem der Ansprüche 1 bis 13, dadurch **gekennzeichnet,** daß es einen vorzugsweise quer eingebauten Frontmotor hat, daß die Hauptantriebsachse die Vorderachse ist, und daß die Viskose-Kupplung (32) und das als Zusatzkupplung arbeitende Planetengetriebe in einem Antriebsstrang zur Hinterachse liegen.

15. Kraftfahrzeug nach Anspruch 14, dadurch **gekennzeichnet,** daß das Planetengetriebe (22, 24, 26, 28) hinter dem Vorderachsdifferential und vorzugsweise unmittelbar vor der Viskose-Kupplung (32) liegt.

16. Kraftfahrzeug nach einem der Ansprüche 1 bis 15, dadurch **gekennzeichnet,** daß das Planetengetriebe (94) vor dem Hinterachsdifferential (96) liegt.

17. Kraftfahrzeug nach einem der Ansprüche 1 bis 16, dadurch **gekennzeichnet,** daß es einen Standardantrieb mit einem vom Frontmotor zu der die Hauptantriebsachse bildenden Hinterachse führenden Antriebsstrang hat, von dem über das Planetengetriebe und die Viskose-Kupplung ein Antriebsstrang an die Vorderachse abgeht.

## Claims

1. Motor vehicle with four wheel drive, in which only the wheels of one axle are driven all the time, while the drive for the wheels of the second axle can be achieved by means of a clutch operating automatically in dependence upon the driving conditions, preferably a viscose clutch, arranged in the drive shaft between the axles, in which the drive shaft between the axles houses the auxiliary clutch in the form of an epicyclic gear, especially a planetary gear (22, 24, 26, 28), which is subjected to a brake mechanism operated by a hydraulic work cylinder for blocking one of the gear elements (26), characterised in that the hydraulic work cylinder with a brake piston (42) acting upon the blocking gear element and a pump (60) supplying the work chamber (56) with gear oil together with the gear oil chamber and a control valve (74), situated in the hydraulic circuit, which controls the connection (58) to the work chamber, is constructed as one unit with a power take-off gear containing the viscose clutch (32) and the epicyclic gear (22, 24, 26, 28).

2. Motor vehicle according to claim 1, characterised in that the pump (60) is a reciprocating piston pump.

3. Motor vehicle according to claim 1 or 2, characterised in that the pump (60) is driven by the main drive axle (64) of the motor vehicle, preferably via an eccentric gear (62).

4. Motor vehicle according to one of the claims 1 to 3, characterised in that between pump (60) and the work cylinder is connected a compression spring magazine (72), which is also constructed as one unit with the power take-off gear.

5. Motor vehicle according to one of the claims 1 to 4, characterised in that the work cylinder is shut off by the blocking gear element itself, and the brake piston (42) is shut off by the blocking gear element via a spring element, especially a laminated spring assembly (54).

6. Motor vehicle according to one of the claims 1 to 5, characterised in that the brake piston (42) is constructed as an annular piston which acts upon a rotatably mounted ring gear (26) of the planetary gear and which is suited to brake this firmly.

7. Motor vehicle according to one of the claims 1 to 6, characterised in that the drive of the planetary gear (22, 24, 26, 28) is effected via the planetary wheel support (22), and the power take-off takes place via the sun wheel (28).

8. Motor vehicle according to one of true claims 1 to 7, characterised in that the ring gear (26) is braked firmly during normal drive operation, and accordingly makes effective the four wheel drive operating via the viscose clutch (32).

9. Motor vehicle according to one of the claims 1 to 8, characterised in that it contains a control unit (44) which releases the ring gear (26) by releasing the pressure in the work cylinder and accordingly uncouples the axles

(a) when operating the brake (46) as well as, if necessary, responding to an anti-blocking system resulting from this and/or

(b) when being pushed and/or

(c) when the vehicle is towed and/or

(d) in the case of low ambient temperatures during shunting and/or

(e) when carrying out servicing work, for example roller type test stand measurements or when dynamically balancing the wheels.

10. Motor vehicle according to claim 9, characterised in that the control unit (44) receives as input values a signal characterising the position of the brake pedal (46) and the accelerator pedal (48) as well as a signal characterising the switch-on position of the ignition (50) and produces a signal for the brake to activate the ring gear (26).

11. Motor vehicle according to claim 10, characterised in that the control unit (44) receives as further input values the signal of a steering angle pick-up and the signal of a temperature sensor in the viscose clutch (32) and if necessary a signal characterising the engine speed and/or the signal of a timer.

12. Motor vehicle according to one of the claims 1 to 7, characterised in that the ring gear (26) during normal drive operation is released, and accordingly the four wheel drive operating via the viscose clutch (32) is ineffective.

13. Motor vehicle according to claim 12, characterised in that the ring gear (26) is firmly braked by the action of an operator and/or is automatically braked solid when exceeding a given speed differential between the axles.

14. Motor vehicle according to one of the claims 1 to 13, characterised in that it has preferably a transverse front engine, that the main drive axle is the front axle, and that the viscose clutch (32) and the planetary gear acting as the auxiliary clutch are arranged in a drive shaft to the rear axle.

15. Motor vehicle according to claim 14, characterised in that the planetary gear (22, 24, 26, 28) is situated behind the front axle differential and preferably directly in front of the viscose clutch (32).

16. Motor vehicle according to one of the claims 1 to 15, characterised in that the planetary gear (94) is situated in front of the rear axle differential (96).

17. Motor vehicle according to one of the claims 1 to 16, characterised in that it has a standard drive with the front engine connected to the rear axle, forming the main drive axle, by a drive shaft from which, via the planetary gear and the viscose clutch, a drive shaft leads off to the front axle.

## Revendications

1. Véhicule à quatre roues motrices dans lequel les roues d'un seul essieu sont entraînées en permanence, tandis que l'entraînement des roues du deuxième essieu peut être réalisé au moyen d'un accouplement, notamment d'un accouplement visqueux, situé dans la chaîne de transmission entre les essieux et agissant automatiquement en fonction des conditions de roulement, la chaîne de transmission comportant un accouplement secondaire qui permet l'accouplement et le désaccouplement en fonction du couple de la transmission, et qui se présente sous la forme d'un train épicycloïdal placé entre les essieux, notamment d'un train planétaire (22, 24, 26, 28) sur lequel agit un mécanisme de freinage commandé par un vérin hydraulique pour le blocage d'un élément du train (26), caractérisé en ce que le vérin hydraulique muni d'un piston de freinage (42) agissant sur l'élément du train à bloquer, et une pompe (60) alimentant une chambre de travail (56) du vérin hydraulique en huile de boîte ainsi que la chambre d'huile de boîte et une vanne de commande (74) située dans le circuit hydraulique, qui met en communication la conduite (58) avec la chambre de travail (56), sont réunis sur le plan constructif en une unité de boîte de transfert comprenant l'accouplement visqueux (32) et le train épicycloïdal (22, 24, 26, 28).

2. Véhicule automobile selon la revendication 1, caractérisé en ce que la pompe (60) est une pompe à piston alternatif.

3. Véhicule automobile selon la revendication 1 ou 2, caractérisé en ce que la pompe (60) est entraînée par l'essieu moteur principal (64) du véhicule automobile, de préférence par l'intermédiaire d'un mécanisme à excentrique (62).

4. Véhicule automobile selon l'une des revendications 1 à 3, caractérisé en ce qu'un accumulateur à ressort de compression (72) est monté entre la pompe (60) et le vérin hydraulique, ledit accumulateur étant de préférence réuni sur le plan constructif à l'unité de boîte de transfert.

5. Véhicule automobile selon l'une des revendications 1 à 4, caractérisé en ce que le vérin hydraulique est à simple effet, et le piston de freinage (42) est décollé de l'élément du train à bloquer par un élément élastique, en particulier un paquet de disques élastiques (54).

6. Véhicule automobile selon l'une des revendications 1 à 5, caractérisé en ce que le piston de freinage (42) se présente sous la forme d'un piston annulaire qui agit sur une couronne (26) du train planétaire et est adapté pour la bloquer.

7. Véhicule automobile selon l'une des revendications 1 à 6, caractérisé en ce que le train planétaire (22, 24, 26, 28) est mené par l'intermédiaire du porte satellite (22) et menant par l'intermédiaire de la roue solaire (28).

8. Véhicule automobile selon l'une des revendications 1 à 7, caractérisé en ce que la couronne 26 est bloquée en marche normale, et qu'en conséquence la propulsion à quatre roues motrices est effective par l'intermédiaire de l'accouplement visqueux (32).

9. Véhicule automobile selon l'une des revendications 1 à 8, caractérisé en ce qu'il comporte une unité de commande (44), qui libère la couronne (26) par relâchement de la pression du vérin, et par conséquent désaccouple les essieux

    (a) lors de l'actionnement du frein de service (46) ainsi que le cas échéant lors d'une réaction du système antiblocage en résultant, et/ou

    (b) en marche en roulement et/ou

    (c) en marche en roulement du véhicule automobile et/ou

    (d) en cas de faible température ambiante, lors des manoeuvres et/ou

    (e) lors des travaux d'entretien, par exemple lors de mesures au banc d'essai à rouleaux ou lors de l'équilibrage dynamique des roues.

10. Véhicule automobile selon la revendication 9, caractérisé en ce que l'unité de commande (44) reçoit comme grandeurs d'entrée un signal caractérisant la position de la pédale de frein (46) et de la pédale d'accélérateur (48), ainsi qu'un signal caractérisant l'état de l'allumage (50), et délivre un signal activant le frein de la couronne (26).

11. Véhicule automobile selon la revendication 10, caractérisé en ce que l'unité de commande (44) reçoit comme grandeurs d'entrée supplémentaires le signal d'un capteur d'angle de braquage et le signal d'une sonde de température placée sur l'accouplement visqueux (32) et le cas échéant un signal caractérisant la vitesse de rotation du moteur et/ou le signal d'une horloge.

12. Véhicule automobile selon l'une des revendications 1 à 7, caractérisé en ce que la couronne (26) est libérée en marche normale, et que par conséquent la propulsion à quatre roues motrices passant par l'accouplement visqueux (32) est inopérante.

13. Véhicule automobile selon la revendication 12, caractérisé en ce que la couronne (26) peut être bloquée par une intervention de commande et/ou de manière automatique lors du dépassement d'un écart de vitesses donné entre les essieux.

14. Véhicule automobile selon l'une des revendications 1 à 13, caractérisé en ce qu'il comporte un moteur placé à l'avant de préférence transversal, en ce que l'essieu moteur principal est l'essieu avant, et en ce que l'accouplement visqueux (32) et le train planétaire faisant office d'accouplement secondaire sont placés dans une chaîne de transmission menant vers l'essieu arrière.

15. Véhicule automobile selon la revendication 14, caractérisé en ce que le train planétaire (22, 24, 26, 28) est placé derrière le différentiel d'essieu avant et de préférence immédiatement avant l'accouplement visqueux (32).

16. Véhicule automobile selon l'une des revendications 1 à 15, caractérisé en ce que le train planétaire (94) est placé avant le différentiel d'essieu arrière (96).

17. Véhicule automobile selon l'une des revendications 1 à 16, caractérisé en ce qu'il comporte une propulsion standard avec une chaîne de transmission menant du moteur placé à l'avant à l'essieu arrière constituant l'essieu moteur principal, de laquelle part une chaîne de transmission menant à l'essieu avant par l'intermédiaire du train planétaire et de l'accouplement visqueux.

# FIG.1

EP 0 292 858 B1

FIG.2

EP 0 292 858 B1

# FIG. 3